# EUROPEAN PATENT SPECIFICATION

(11) **EP 3 702 654 B1**
(45) Date of publication and mention of the grant of the patent: **19.07.2023**
(21) Application number: 19160026.1
(22) Date of filing: 28.02.2019
(51) Int. Cl.: F16L 11/08, F16L 11/10, F16L 11/12

(54) **HOSE WITH LIGHT EMITTING ELEMENT**
SCHLAUCH MIT LEUCHTENDEM ELEMENT
TUYAU AVEC UN ÉLÉMENT LUMINEUX

(43) Date of publication of application: 02.09.2020
(73) Proprietor: Firelight AB, 840 95 Funäsdalen (SE)
(72) Inventor: Karlsson, Fredrik, 555 94 JÖNKÖPING (SE)
(74) Representative: AWA Sweden AB

(56) References cited:
- EP-A1- 1 026 922
- WO-A1-01/04540
- DE-U1-202011 051 897
- US-A1- 2004 200 536

## Description

### FIELD OF THE INVENTION

The present invention relates to the field of hoses, and particularly to a hose comprising a light emitting element.

### BACKGROUND OF THE INVENTION

Hoses are used in numerous applications for conveying fluids. Generally, hoses are composed of a rubber like material which provides flexibility to the hose and which is impermeable such to contain the fluid conveyed there through. Commonly for some applications, hoses comprise an outer layer which is composed of a less flexible material, such to limit the expansion of the rubber like material due to the pressure involved when fluid passes through the hose. Such an outer layer is often made of a woven material. The outer layer may further be coated or subjected to treatments such to adapt to the requirements posed by the external environment in which the hose is to be used.

In some applications, the environments in which the hose is used are dark making it hard to distinguish the extension of the same. This can sometimes be troublesome, for example when the hose is arranged to at least partly extend along a street where pedestrians or vehicles are transiting. Even more critical are environs of hoses used for plunging and firefighting, where the darkness sometimes can lead to the person operating the hose becoming disoriented. Such environs are furthermore highly stressing, the hose being exposed to high levels of humidity, temperature, and toxic gas. There is thus a need for a hose which can be efficient in dark environments and which is resistant to harsh conditions.

DE 20 2011 051897 U1 discloses a hose with integrated luminescent lighting elements which is powered via photovoltaic devices, a power grid or a battery.

WO 01/04540 A1 discloses a fire hose comprising a light emitting element on its exterior surface which can be selectively activated to indicate a direction to an end of the fire hose or for transmitting a message along the exterior surface, enabling a fire fighter to visually see where the fire hose is located, and to follow the activated light emitting element to the exit of a building.

### SUMMARY OF THE INVENTION

An object of the present invention is to overcome, or at least lessen the above mentioned problems. A particular object is to provide a hose which is at least partly illuminated.

To better address this concern, in a first aspect of the invention there is presented a hose extending between a first end and a second end for conveying a liquid there through. The hose comprises an inner layer, an outer layer, and a light emitting element. The light emitting element is arranged between the inner layer and the outer layer. The hose further comprises a first coupling element at an end thereof, for connecting said hose to a fluid supply source and/or to another hose, wherein said coupling element is connectable to a second complementing coupling element provided at a fluid supply source and/or at an end of another hose, wherein said first coupling element houses an electrical contact of said light emitting element positioned to abut an electrical contact housed in the second coupling element when said first coupling element is coupled to the second complementing coupling element.

There is thus provided a hose which is at least partly illuminated for providing visibility of the hose in the dark. The arrangement of the light emitting element between the inner and the outer layers of the hose provides a protective arrangement of the light emitting element. That is, the light emitting element is protected, on the one hand, from direct contact with the liquid conveyed through the hose by the inner layer. On the other hand, the light emitting element is protected from the conditions of the environment on the exterior of the hose by the outer layer thereof.

The connection of the light emitting element to the power source can here be achieved through the first coupling element of the hose, when engaged with the second, complementing, coupling element when the latter houses a powered electrical contact. Such second coupling element may for example be installed at the connection point of a liquid source, or other supply source, to the hose. The arrangement of the electrical contacts housed within the respective coupling elements is such that they enter in contact with each other when the coupling elements are engaged. Thereby, the light emitting element is powered by simply connecting the hose to the supply source, both provided with corresponding coupling elements, without the need of any additional action for activating the light emitting element.

The hose can be adapted for use in any application in which an illuminated hose is needed. For example, the hose can be adapted for use as a firefighting hose. In this embodiment, the arrangement of the light emitting element between the inner layer and the outer layer of the hose thus allows protecting the light emitting element from direct exposure to the liquid passing through the hose, on the one hand, and to the heat of the surroundings on the other hand. This arrangement of the light emitting element is here particularly advantageous considering that the liquid passing through the hose provides a cooling of the light emitting element, thereby preventing overheating of the same when the hose is exposed to high temperatures.

In accordance with an embodiment of the fire hose, the inner layer and the outer layer are bonded to each other, thereby fixing the light emitting element there between. This allows for an efficient manufacturing of the hose, considering that once the light emitting element is arranged between the inner layer and the outer layer, a regular bonding process of the outer layer to the inner layer can be performed to also fix the light emitting element. Thus, no additional bonding step is required for fixing the light emitting element between the inner layer and the outer layer of the hose.

In accordance with an embodiment of the hose, the light emitting element is arranged to extend along a longitudinal extension of the hose between the first and the second end thereof. The light emitting element may be any element arrangeable between the inner and outer layers of the hose and capable of emitting light, without compromising the flexibility of the hose. By providing a light emitting element extending between the first and the second end of the hose, the visibility of the complete hose is improved.

In accordance with an embodiment of the hose, the light emitting element comprises a linear arrangement of light emitting elements. The linear arrangement preferably extends in the longitudinal direction of the hose, thereby providing illumination along the extension thereof.

In accordance with an embodiment of the hose, the light emitting element comprises a plurality or an array of light emitting diodes, LEDs. The LEDs are in a preferred embodiment interconnected. By the term "array" it is here generally meant a linear arrangement or a chain of interconnected LEDs. A plurality of interconnected LEDs may, however, also be arranged in a non-linear manner. The array or plurality of LEDs is generally arranged at a surface of a strip having a length corresponding to that of the hose. This provides a flexible light emitting element which does not compromise the flexibility of the hose as a whole.

In accordance with an embodiment of the hose, the LEDs are evenly distributed along the longitudinal extension of the hose. The distance between each LED is may be adapted to a selected requirement on the illumination of the hose. The distance between each LED can further vary depending on the total length of the hose and on the total number of LEDs arranged thereon.

In accordance with an embodiment of the hose, the LEDs are unevenly distributed along the longitudinal extension of the hose. This allows tailoring the illumination of the hose to the requirements thereon. For example, depending on the use of the hose it may not be necessary to provide illumination of the entire length thereof. The LEDs can thus be arranged such that light is emitted only along portions of the length of the hose requiring illumination. It is also possible, according to an embodiment, to provide a first array of LEDs along a first length portion of the hose, and a second array of LEDs along a second length portion of the hose. In the second array of LEDs, the distance between each LED can be different from the distance between each LED of the first array of LEDs, e.g. shorter or longer.

In accordance with an embodiment of the hose, the light emitting element is arranged to emit light continuously or discontinuously. Thus, the light emitting element can, in one embodiment, be arranged to emit a constant light. Alternatively, the light emitting element can be arranged to emit flashes of light.

In accordance with an embodiment of the fire hose, the hose is at least one of a soft hose and a semi-rigid hose. Consequently, when the hose is soft it adapts an overall flat shape when no liquid is conveyed there through, and an overall cylindrical shape when liquid passes there through. When the hose is provided as a semi-rigid hose, the hose has an overall cylindrical shape even when no liquid is conveyed there through. Such a semi-rigid hose can also be referred to as a dimensionally stable hose. Correspondingly, the inner and the outer layers of the hose are thus adaptable such to provide a soft or a semi-rigid hose. The rigidity of the hose can be conferred thereto for example by providing an outer layer of a material which is semi-rigid. Alternatively, rigidity of the hose can be conferred thereto by the inner layer being of a material which is semi-rigid. In yet another embodiment, the rigidity of the hose is conferred thereto by the bond between the inner and the outer layers, adapting a semi-rigid structure upon forming, or by any combination of the aforementioned.

In accordance with an embodiment of the hose, the inner layer is composed of a rubber material and the outer layer is composed of a woven material. The outer layer is further composed of a material allowing passage of light from the light emitting element there through, such that the hose is at least partly illuminated when the light emitting element is lit. The rubber material of the inner layer provides a protection for the light emitting element from the fluid passing through the hose. On the other side, the material of the outer layer provides protection for the light emitting element from the external conditions in which the hose is used, such as to high temperatures.

In accordance with an embodiment of the hose, the light emitting element is driven by power from at least one of a power outlet and a battery. To connect the light emitting element to a power outlet, the light emitting element is, according to an embodiment, provided with a contact at one end thereof, which extends beyond either the first or the second end of the hose.

In accordance with the first aspect of the invention, the hose comprises a first coupling element at an end thereof, which first coupling element is connectable to a second complementing coupling element, wherein the first coupling element houses an electrical contact of the light emitting element. The electrical contact is positioned to abut an electrical contact housed in the second coupling element when the first coupling element is engaged with the second coupling element. The connection of the light emitting element to the power source can thus here be achieved through the first coupling element of the hose, when engaged with the second, complementing, coupling element when the latter houses a powered electrical contact. Such second coupling element may for example be installed at the connection point of a liquid source, or other supply source, to the hose. The arrangement of the electrical contacts housed within the respective coupling elements is such that they enter in contact with each other when the coupling elements are engaged. Thereby, the light emitting element is powered by simply connecting the hose to the supply source, both provided with corresponding coupling elements, without the need of any additional action for activating the light emitting element.

According to a second aspect of the present disclosure, there is provided a method for producing a hose extending between a first end and a second end, and comprising an inner layer, an outer layer, and a light emitting element. The method comprises the steps of arranging the outer layer about the inner layer, arranging the light emitting element between the inner layer and the outer layer such that it extends between the first end and the second end of the hose. The method further comprises the step of bonding the outer layer to the inner layer by subjecting the hose to a high temperature, whereby the light emitting element is fixed between the inner layer and the outer layer.

The high temperature to which the hose is subjected is adapted such to generate vulcanization of the inner layer and the outer layer providing a bond there between. This provides an efficient method for producing a hose comprising a light emitting element, considering that no additional step is required for the fixing of the light emitting element between the inner layer and the outer layer.

It is also possible, according to an alternative embodiment of the method, to first arrange the light emitting element at an outer surface of the inner layer, then arrange the outer layer about the inner layer and, thus, the light emitting element.

### BRIEF DESCIPRTION OF THE DRAWINGS

The invention will now be described in more detail and with reference to the appended drawings, in which:
Fig. 1 is a schematic perspective partly cut-away view of an embodiment of a hose according to an aspect of the invention;
Fig. 2 is a schematic perspective partly cut-away view of an embodiment of a hose according to an aspect of the invention;
Fig. 3 is a schematic view of an embodiment of a hose comprising a coupling element according to an aspect of the invention; and
Fig. 4 is a schematic view of a coupling element of an embodiment of a hose according to an aspect of the invention, which coupling element is connected to a second coupling element.

### DESCRIPTION OF EMBODIMENTS

The present invention will now be described more fully hereinafter with reference to the accompanying drawings, in which exemplifying embodiments of the invention are shown. The present invention may, however, be embodied in many different forms and should not be construed as limited to the embodiments set forth herein; rather, these embodiments are provided for thoroughness and completeness, and to fully convey the scope of the invention to the skilled addressee. Like reference characters refer to like elements throughout.

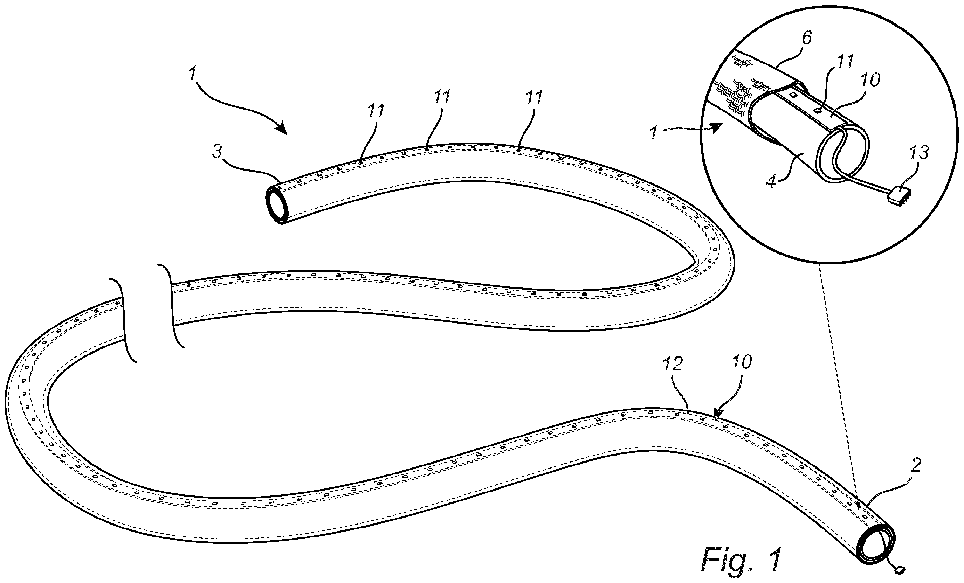

With reference to Fig. 1, there is provided a hose 1 having a first end 2 and a second end 3. The length of the hose 1 is adaptable to meet the requirements of different types of uses of the same. For example, the hose 1 can be adapted for use in firefighting, and provided for a fire truck. The length of such a hose 1 can extend anywhere between approximately 60 and 200 m. The hose 1 can also be provided for a fixed firefighting system, in which case the length of the hose 1 generally is of approximately 10-60 m. Any other length required for other uses of the hose 1, such as for diving and snowmaking, is also conceivable within the concept of the present invention.

The hose 1 comprises an inner layer 4 and an outer layer 6. The outer layer 6 is arranged around the outer surface of the inner layer 4 and coaxially thereto. The inner layer 4 is in an embodiment of the hose 1 composed of a rubber material. The properties of this type of material are advantageous for the conveying of fluids through the hose, considering in particular the elasticity, toughness and liquid impermeability of the material. Other materials providing suitable properties for the conveying of fluids through the hose 1 are however also possible within the concept of the present invention.

The outer layer 6 is arranged to meet the requirements of the exterior surrounding in which the hose 1 is to be used. In an embodiment of a hose 1 for use in firefighting, the outer layer 6 is composed of a woven material generally used for fire hoses, providing resistance to high temperatures. Such a woven material may be coated or treated to improve its properties, particularly its resistance to high temperature and ignition. Also the materials of the inner layer 4 and the outer layer 6 are flexible, such that the hose 1 is substantially flat when no liquid passes there through. On the other hand, when liquid passes through the hose 1, the hose 1 adapts a tubular shape.

According to another embodiment, at least one of the materials of the inner and outer layers 4, 6 is at least semi-rigid, such that the hose 1 is dimensionally stable and maintains a cylindrical shape even when no liquid passes there through. In yet another embodiment, the hose 1 is a reinforced hose comprising reinforcing elements. Such reinforcing elements may be of a kind generally known in the art, such as fibers, a spiral, or a mesh. The reinforcing elements can be integrated in the inner layer 4, the outer layer 6, or both. Alternatively, a reinforcing layer can be arranged between the inner layer 4 and the outer layer 6 of the hose.

Continuing with reference to Fig. 1, the hose 1 further comprises a light emitting element 10. The light emitting element 10 is arranged between the inner layer 4 and the outer layer 6 of the hose 1. In the shown embodiment, the light emitting element 10 extends along the longitudinal extension of the hose 1 between the first end 2 and the second end 3 thereof. Here, the light emitting element 10 comprises an array or a plurality of light emitting diodes, LEDs 11, arranged on a strip 12. The LEDs 11 are interconnected by means of a cable arranged on the strip 12. The strip 12 extends between the first end 2 and the second end 3 of the hose 1 and the LEDs 11 are evenly distributed there along. The distance between each LED 11 can be adapted to the requirements on the hose 1 for a particular use. The distance between each LED 11 is also adaptable to the total length of the hose 1, and to the capacity of the connection of the LEDs in terms of tension. That is, for a hose 1 having a large length, the distance between each LED 11 is adapted such to avoid overtensioning the connections of the LEDs 11 due to an excessive number of interconnected units. In an embodiment, and as an example only, the distance between each LED 11 of the hose 1 is approximately 20-30 cm. This distance may however be smaller or larger, depending on the total length of the hose 1 and on the illumination requirements thereon.

The LEDs 11 can be configured to emit a constant light such that light is emitted continuously. In another embodiment, the LEDs 11 are configured to emit flashes of light, such that light is emitted discontinuously.

Furthermore, the color of the light emitted from the light emitting element 10 is adaptable and can, for example, be white, red, green, or of another color.

In the exemplifying embodiment of Fig. 1, the LED strip 12 is provided with a contact 13 at a first end thereof. The light emitting element 10 is here powered by connecting the contact 13 to a power outlet, such as a power outlet of a firefighting vehicle or of a fixed firefighting system.

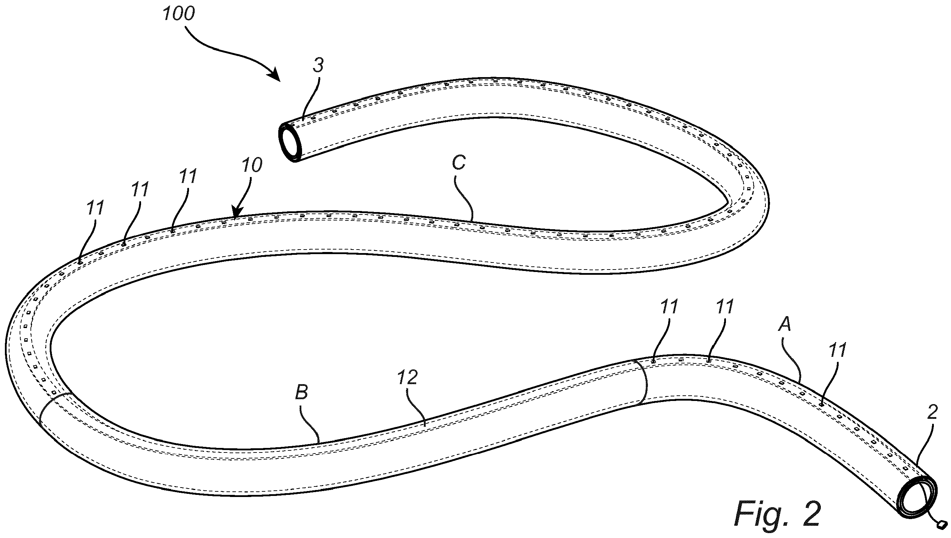

With reference now to Fig. 2, there is provided an alternative embodiment of the hose 100 for conveying liquid. In this embodiment, the light emitting element 10 comprises LEDs 11 arranged on a strip 12 extending between the first end 2 and the second end 3 of the hose 100. The LEDs 11 are here unevenly distributed along strip 12 and, thus, along the longitudinal extension of the hose 1. More particularly, the hose 1 may be divided into zones A, B, and C, representing adjacent longitudinal extensions thereof. Zone A of the hose 100 comprises the first end 2 thereof and a first plurality of LEDs 11. In the first plurality of LEDs 11, the LEDs 11 are arranged on a line extending in the longitudinal direction of the hose 100 at a distance from each other. In zone B, extending between zone A and zone C, the strip 12 does not comprise any LEDs 100. Zone C, extending from zone B to the second end 3 of the hose 100, comprises a second plurality of LEDs 11. The second plurality of LEDs 11 here comprises LEDs 11 distributed on a line in the longitudinal direction of the hose 100 at a distance from each other which is shorter than the distance between LEDs 11 of the first plurality of LEDs. The skilled person understands, however, that providing a second plurality of LEDs 11 with LEDs arranged at a larger distance from each other is also possible within the concept of the present invention. In light of the present disclosure, the skilled person thus realizes that providing any distribution, regular or irregular, of LEDs 11 on the strip 12 is conceivable.

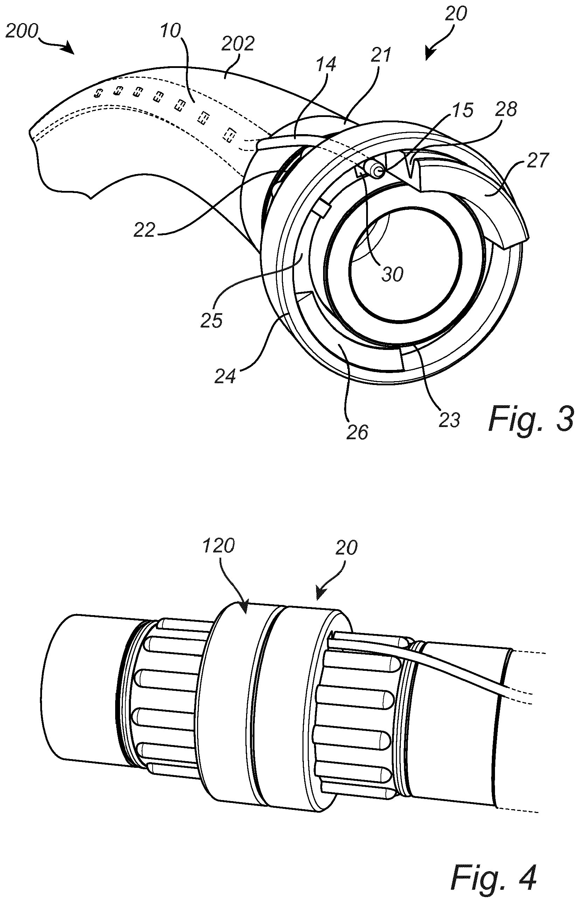

With reference now to Fig. 3, there is presented an embodiment of a hose 200 comprising a first coupling element 20 at the first end 202 thereof. The first coupling element 20 comprises a fitting portion 21, which is fitted to the hose end 202, and a coupling portion 22. The coupling portion 22 comprises an inner annular sealing portion 23 and an outer annular sealing portion 24. The inner walls of the inner annular sealing portion 23 provides a prolongation of the hose 200 such that liquid flowing through the hose 200 can flow through the aperture defined by the inner walls of the inner annular sealing portion 23. The inner annular sealing portion 23 and the outer annular sealing portion 24 are arranged at a distance from each other in the radial direction, forming an annular groove 25 there between. The coupling portion 22 further comprises a first, v-shaped, protrusion 26, partly covering a portion of the annular groove 25. The first protrusion 26 is arranged along a portion of the inner perimeter of the outer annular sealing portion 24, protruding therefrom in a radial direction, the tip of the v-shape pointing towards the center of the circle defined by the outer annular sealing portion 24. The coupling portion 22 further comprises a tongue portion 27, arranged at another portion of the annular groove 25. The tongue portion 27 extends beyond the outer annular sealing portion 24 in an axial direction of the hose 1, thus protruding axially thereof. The tongue portion 27 comprises a recess 28 along the outer peripheral extension of the axially protruding portion of the tongue portion 27. The first, v-shaped, protrusion 26 and the tongue portion 27 are further arranged such that the first coupling element 20 is connectable to a second, complementing coupling element 120 by arranging the corresponding inner and outer annular sealing portions 23, 24 of the coupling elements 20, 120 against each other and turning at least one of the coupling elements 20 with respect to the other around its axial direction. The first protrusion 26 of the first coupling element 20 thereby enters into engagement with the recess of the tongue portion 27 of the second coupling element 120, while the first protrusion of the second coupling element 120 enters into engagement with the recess 28 of the second protrusion 27 of the first coupling element 20. Thereby a fixed sealed engagement of the two coupling elements 20, 120, see Fig. 4, is provided. In the specific embodiment shown in Fig. 3, the tongue portion 27 and the first protrusion 26 are arranged at opposing portions of the annular groove 25. This positioning of the first protrusion and the tongue portion is preferable in view of the stability of the engagement of the first coupling element with the second coupling element. However, it is also possible to provide a different positioning of the first protrusion 26 and the tongue portion 27, as well as more than one of each, within the concept of the present invention. The skilled person will further understand that alternatives to the first protrusion 26 and the tongue portion 27 are also possible for achieving a fixed sealed engagement of the two coupling elements.

Furthermore, the first coupling element 20 houses an electrical contact of the light emitting element 10. In the particular embodiment shown in Fig. 3, the first coupling element 20 comprises an aperture 30 at a side wall portion of the coupling element 20. More particularly, the aperture 30 extends from an outer wall portion of the coupling portion 22 to the bottom of the annular groove 25. An end portion 14 of the light emitting element 10 is here arranged to pass through the aperture 30 such that the end 15 of the light emitting element 10 is positioned within the first coupling element 20, and within the annular groove 25. The end 15 of the light emitting element 10 end portion 14 comprises an electrical contact therefor. The electrical contact is thus positioned within the annular groove 25 at a portion between the first protrusion 26 and the tongue portion 27. Although embodied as a contact point in Fig. 3, it is also possible to provide an electrical contact having a larger electrical contact surface within the annular groove 25, extending therein along a portion between the first protrusion 26 and the tongue portion 27.

The end portion 14 of the light emitting element 10, although shown in Figs. 3-4, as partly extending along an outer surface portion of the first coupling element 20, may also be arranged to extend into the annular groove 25 through the fitting portion 21 of the first coupling element 20, such that it is well protected from exterior conditions. Alternatively, if needed, the end portion 14 of the light emitting element 10 partly extending along an outer surface portion of the first coupling element 20 can be protected from direct exposure to the exterior conditions by arranging a protective material thereon.

As previously described, the coupling element 20 is so arranged to be connectable to a second, complementing, coupling element 120. Such a second coupling element 120, housing an electrical contact in its annular groove 25, can for example be arranged at the supply source of the hose. The supply source may be for example a water supply source, or an oxygen supply source, i.e. from which water or oxygen is supplied to the hose 200. Furthermore, the supply source provides power for the electrical contact comprised in the second coupling element 120. The position of the electrical contact of the light emitting element 10 housed in the first coupling element 20 is inverted with respect to the position of the electrical contact housed within the second coupling element 120. Hence, when connecting the hose 200 to its supply source by means of the respective coupling elements 20, 120, the electrical contact 15 of the light emitting element 10 abuts the powered electrical contact housed within the coupling element 120 of the supply source. Thereby, current passes there through and the light emitting element 10 is powered to emit light. The hose 200 comprising the first coupling element 20 has the advantage that no further action other than connecting the hose 200 to a supply source is needed in order to activate the light emitting element 10, providing an efficient hose.

Arranged in the annular groove 25 of the first coupling element 20, the electrical contact of the light emitting element 10 is further protected from any liquid flowing through the hose 200 by the inner annular sealing portion 23, and from external conditions by the outer annular sealing portion 24.

It shall be understood that it is possible to provide the hose 200 with a first coupling element 20 as herein described at each end of the hose 200. This allows connecting the hose to its supply source by means of the first coupling element 20 at the first end thereof, and to another hose by means of the coupling element at the second end thereof, provided that the second hose comprises a complementing coupling element 120 as described, or compatible therewith, at an end thereof. This allows powering a light emitting element of the second hose by simply connecting the coupling elements of the respective first and second hose ends.

In an alternative embodiment, there is provided a hose comprising a coupling element further comprising a generator for powering the light emitting element 10. The generator generates electrical energy as a liquid, such as water, flows there through. Thus, in operation, electrical energy is generated in response to flow of fluid through the coupling element of the hose. According to this embodiment, the electrical energy generated is used to power the light emitting element. This provides an efficient hose, using the liquid conveyed through the hose for powering the light emitting element. This further facilitates the installation of the hose at a liquid source, considering that no adaptation of the hose further to the coupling thereof to a liquid source, is needed in order for the light emitting element to function.

To form the hose 1, the outer layer 6 is first arranged about the inner layer 4. Thereafter, the light emitting element 10, such as a LED strip 12, is arranged between the inner and outer layers 4, 6. The hose 1 is then subjected to a high temperature generating a vulcanization process between the inner and outer layers, by which the outer layer is bonded to said inner layer. As a result, the light emitting element is fixed between the inner layer 4 and the outer layer 6. Alternatively, the light emitting element 10 is arranged at the outer surface of the inner layer 4 prior to arranging the outer layer 6 around the inner layer 4.

The skilled person realizes that a number of modifications of the embodiments described herein are possible without departing from the scope of the invention, which is defined in the appended claims. For example, the distribution of the light emitting element 10 has in the exemplifying embodiments been shown as linear along the longitudinal extension of the hose 1. However, providing a light emitting element 10 extending between the first and second ends 2, 3 of the hose 1 in a non-linear manner is also possible within the concept of the present invention. It is also possible to provide a light emitting element 10, such as LEDs, being evenly distributed over the whole outer surface of the inner layer 4 of the hose 1. This can for example be achieved by providing a plurality of strips comprising LEDs distributed thereon. The strips can for example be arranged at a distance from each other around the circumference of the inner layer, extending longitudinally of the hose. The distance, or gap, between the strips are, in this embodiment, arranged such that bonding of the outer layer to the inner layer is allowed thereat.

Alternatively, the light emitting element 10 may be arranged such to provide a direction indication of the hose 1. Such a direction indication can for example involve a plurality of LEDs arranged such to form an arrow-shape, the arrow-shape pointing towards either of the first end 2 or the second end 3 of the hose 1.

Other variations to the disclosed embodiments can be understood and effected by those skilled in the art in practicing the claimed invention, from a study of the drawings, the disclosure, and the appended claims. In the claims, the word "comprising" does not exclude other elements or steps. Any reference signs in the claims should not be construed as limiting the scope.

## Claims

1. A hose (1, 100, 200) extending between a first end (2) and a second end (3) for conveying a liquid there through, the hose comprising:
an inner layer (4);
an outer layer (6); and
a light emitting element (10),
wherein said light emitting element is arranged between said inner layer and said outer layer, and
said hose further comprises a first coupling element (20) at an end thereof, for connecting said hose to a fluid supply source and/or to another hose, wherein said coupling element is connectable to a second complementing coupling element (120) provided at a fluid supply source and/or at an end of another hose, **characterized in that** said first coupling element houses an electrical contact of said light emitting element (10) positioned to abut an electrical contact housed in the second coupling element when said first coupling element is coupled to the second complementing coupling element.

2. The hose (1) according to claim 1, wherein said inner layer (4) and said outer layer (6) are bonded to each other, thereby fixing said light emitting element (10) there between.

3. The hose (1, 100) according to any one of the preceding claims,
wherein said light emitting element (10) is arranged to extend along a longitudinal extension of said hose between said first end (2) and said second end (3).

4. The hose (1, 100) according to any one of the preceding claims,
wherein said light emitting element (10) comprises a linear arrangement of light emitting elements.

5. The hose (1, 100) according to any one of the preceding claims,
wherein said light emitting element (10) comprises a plurality of light emitting diodes, LEDs, (11).

6. The hose (1, 100) according to claim 5, wherein said LEDs (11) are evenly distributed along said longitudinal extension of said hose.

7. The hose (1, 100) according to claim 5, wherein said LEDs (11) are unevenly distributed along said longitudinal extension of said hose.

8. The hose (1, 100) according to any one of the preceding claims,
wherein said light emitting element (10) is arranged to emit light continuously or discontinuously.

9. The hose (1, 100) according to any one of the preceding claims,
wherein said hose is at least one of a soft hose and a semi-rigid hose.

10. The hose (1, 100) according to any one of the preceding claims,
wherein said inner layer (4) is comprised of a rubber material and said outer layer is composed of a woven material (6).

11. The hose (1, 100) according to any one of the preceding claims,
wherein said light emitting element (10) is driven by power from at least one of a power outlet and a battery.

## Patentansprüche

1. Schlauch (1, 100, 200), der zwischen einem ersten Ende (2) und einem zweiten Ende (3) zum Befördern einer Flüssigkeit dort hindurch verläuft, wobei der Schlauch umfasst:
eine Innenschicht (4);
eine Außenschicht (6); und
ein lichtemittierendes Element (10),
wobei das lichtemittierende Ende zwischen der Innenschicht und der Außenschicht angeordnet ist, und
wobei der Schlauch ferner an einem Ende davon ein erstes Kupplungselement (20) zum Verbinden des Schlauchs mit einer Fluidversorgungsquelle und/oder einem anderen Schlauch umfasst,
wobei das Kupplungselement mit einem zweiten ergänzenden Kupplungselement (120), das an einer Fluidversorgungsquelle und/oder am Ende eines anderen Schlauchs vorgesehen ist,
verbindbar ist, **dadurch gekennzeichnet, dass** das erste Kupplungselement einen elektrischen Kontakt des lichtemittierenden Elements (10) einfasst, der zum Angrenzen an einen elektrischen Kontakt, welcher im zweiten Kupplungselement eingefasst ist, positioniert ist, wenn das erste Kupplungselement an das zweite ergänzende Kupplungselement gekuppelt ist.

2. Schlauch (1) nach Anspruch 1, wobei die Innenschicht (4) und die Außenschicht (6) miteinander verbunden sind, wodurch das lichtemittierende Element (10) dazwischen befestigt ist.

3. Schlauch (1, 100) nach einem der vorhergehenden Ansprüche, wobei das lichtemittierende Element (10) derart angeordnet ist, dass es entlang einer Längserstreckung des Schlauchs zwischen dem ersten Ende (2) und dem zweiten Ende (3) verläuft.

4. Schlauch (1, 100) nach einem der vorhergehenden Ansprüche, wobei das lichtemittierende Element (10) eine lineare Anordnung von lichtemittierenden Elementen umfasst.

5. Schlauch (1, 100) nach einem der vorhergehenden Ansprüche, wobei das lichtemittierende Element (10) mehrere Leuchtdioden (11), LED, umfasst.

6. Schlauch (1, 100) nach Anspruch 5, wobei die LED (11) gleichmäßig entlang der Längserstreckung des Schlauchs verteilt sind.

7. Schlauch (1, 100) nach Anspruch 5, wobei die LED (11) ungleichmäßig entlang der Längserstreckung des Schlauchs verteilt sind.

8. Schlauch (1, 100) nach einem der vorhergehenden Ansprüche, wobei das lichtemittierende Element (10) zum kontinuierlichen oder diskontinuierlichen Aussenden von Licht angeordnet ist.

9. Schlauch (1, 100) nach einem der vorhergehenden Ansprüche, wobei der Schlauch zumindest eines eines weichen Schlauchs und eines halbstarren Schlauchs ist.

10. Schlauch (1, 100) nach einem der vorhergehenden Ansprüche, wobei die Innenschicht (4) aus einem Kautschukmaterial gebildet ist und die Außenschicht aus einem gewebten Material (6) gebildet ist.

11. Schlauch (1, 100) nach einem der vorhergehenden Ansprüche, wobei das lichtemittierende Element (10) durch Strom aus zumindest einem einer Steckdose und einer Batterie betrieben wird.

## Revendications

1. Tuyau (1, 100, 200) s'étendant entre une première extrémité (2) et une seconde extrémité (3) pour y transporter un liquide, ce tuyau comprenant :
une couche intérieure (4) ;
une couche extérieure (6), et
un élément électroluminescent (10),
dans lequel ledit élément électroluminescent est disposé entre ladite couche interne et ladite couche externe, et
ledit tuyau comprend en outre un premier élément d'accouplement (20) au niveau d'une extrémité de celui-ci, pour raccorder ledit tuyau à une source d'alimentation en fluide et/ou à un autre tuyau, dans lequel ledit élément d'accouplement peut être connecté à un second élément d'accouplement complémentaire (120) prévu au niveau d'une source d'alimentation en fluide et/ou au niveau d'une extrémité d'un autre tuyau, **caractérisé en ce que** ledit premier élément d'accouplement loge un contact électrique dudit élément électroluminescent (10) positionné pour venir en butée contre un contact électrique logé dans le second élément d'accouplement lorsque ledit premier élément d'accouplement est couplé au second élément d'accouplement complémentaire.

2. Tuyau (1) selon la revendication 1, dans lequel ladite couche intérieure (4) et ladite couche extérieure (6) sont liées l'une à l'autre, fixant ainsi ledit élément électroluminescent (10) entre elles.

3. Tuyau (1, 100) selon l'une quelconque des revendications précédentes, dans lequel ledit élément électroluminescent (10) est agencé de manière à s'étendre le long d'une extension longitudinale dudit tuyau entre ladite première extrémité (2) et ladite deuxième extrémité (3).

4. Tuyau (1, 100) selon l'une quelconque des revendications précédentes, dans lequel ledit élément électroluminescent (10) comprend une disposition linéaire d'éléments électroluminescents.

5. Tuyau (1, 100) selon l'une quelconque des revendications précédentes, dans lequel ledit élément électroluminescent (10) comprend une pluralité de diodes électroluminescentes ou LED, (11).

6. Tuyau (1, 100) selon la revendication 5, dans lequel lesdites LED (11) sont réparties uniformément le long de ladite extension longitudinale dudit tuyau.

7. Tuyau (1, 100) selon la revendication 5, dans lequel lesdites LED (11) sont inégalement réparties le long de ladite extension longitudinale dudit tuyau.

8. Tuyau (1, 100) selon l'une quelconque des revendications précédentes, dans lequel ledit élément électroluminescent (10) est agencé pour émettre de la lumière de façon continue ou discontinue.

9. Tuyau (1, 100) selon l'une quelconque des revendications précédentes, dans lequel ledit tuyau est au moins l'un d'un tuyau souple et d'un tuyau semi-rigide.

10. Tuyau (1, 100) selon l'une quelconque des revendications précédentes, dans lequel ladite couche intérieure (4) est constituée d'un matériau en caoutchouc et ladite couche extérieure est constituée d'un matériau tissé (6).

11. Tuyau (1, 100) selon l'une quelconque des revendications précédentes, dans lequel ledit élément électroluminescent (10) est entraîné par une alimentation fournie par au moins l'une d'une prise de courant et d'une batterie.
